# EUROPÄISCHE PATENTSCHRIFT

(11) **EP 1 907 716 B1**
(45) Veröffentlichungstag und Bekanntmachung des Hinweises auf die Patenterteilung: **05.09.2018**
(21) Anmeldenummer: 06777517.1
(22) Anmeldetag: 29.06.2006
(51) Int. Cl.: F16C 27/06

(54) **GETRIEBE EINES LENKSYSTEMS MIT EINEM RADIALBEWEGLICHEN LOSLAGER FÜR EINE WELLE**
STEERING SYSTEM WITH A RADIALLY MOBILE BEARING FOR A SHAFT
SYSTÈME DE DIRECTION AVEC UN PALIER LIBRE À DÉPLACEMENT RADIAL POUR ARBRE

(30) Priorität: 27.07.2005 DE 102005035020
(43) Veröffentlichungstag der Anmeldung: 09.04.2008
(73) Patentinhaber: Robert Bosch Automotive Steering GmbH, 73527 Schwäbisch Gmünd (DE)
(72) Erfinder: SCHUST, Achim, 74405 Gaildorf (DE)
(86) Internationale Anmeldenummer: PCT/EP2006/063691
(87) Internationale Veröffentlichungsnummer: WO 2007/012541

(56) Entgegenhaltungen:
- EP-A2- 0 719 695
- WO-A2-03/086836
- DE-A1- 10 325 518
- DE-A1- 19 822 478
- US-A1- 2003 127 277
- US-B1- 6 435 050

## Beschreibung

### Technisches Gebiet

Die Erfindung betrifft ein Getriebe eines Lenksystems mit einem radialbeweglichen Loslager für eine Welle nach dem Oberbegriff des Anspruchs 1.

### Stand der Technik

In Getrieben von Lenksystemen, insbesondere in Zahnstangenlenkgetrieben oder Schneckenradgetrieben sind insbesondere Wellen mit treibenden Rädern, wie Ritzel oder Schnecken, in einem Festlager und einem radialbeweglichen Loslager gelagert. Das Loslager weist dabei einen Freiheitsgrad auf der es gestattet, mit Hilfe einer Anpressvorrichtung das treibende Rad spielfrei auf dem getriebenen Rad öder einer Zahnstange abrollen oder abwälzen zu lassen. Die Anpressvorrichtung dient zudem zur Kompensation von Verschleiß zwischen dem treibenden und getriebenen Rad oder der entsprechenden Verzahnung zwischen den Rädern. Um ein reibungsarmes Nachstellen des Loslagers zu ermöglichen ist konstruktiv aber ein Querspiel, bezogen auf den Freiheitsgrad, zwischen dem Aussenring des Loslagers und einer Aufnahme für das Loslager in einem Getriebegehäuse des Getriebes vorzusehen. Insbesondere bei einem Drehrichtungswechsel der Wellen, bei Lenkgetrieben bei einem Fahrtrichtungswechsel etwa, führt dies zu einer Geräuschbildung.

Die US 2004/0084865 A1 beschreibt ein elektrisches Lenksystem dessen Aktuator ein Elektromotor mit einem angeflanschten Schneckenradgetriebe bildet. Eine Welle, die drehfest mit einer Zylinderschnecke in einem Getriebegehäuse angeordnet ist, ist über zwei Wälzlager als Festlager gelagert. Um eine Geräuschbildung der Verzahnung zwischen der Zylinderschnecke und dem Schneckenrad zu vermeiden schlägt die Druckschrift vor, eine elastische Kupplungsschicht zwischen der Welle und der Zylinderschnecke anzuordnen.

Aus der US 2003/127277 A1 geht ein radialbewegliches Loslager für eine Welle eines Getriebes eines Lenksystems mit einer Buchse oder einem Außenring , der sich in einer Aufnahme eines Gestells oder eines Gehäuses des Getriebes abstützt, hervor, wobei die Buchse oder der Außenring im Innenrung (12) der Schwenkbuchse (14) gehalten ist.

Diese konstruktive Maßnahme ist herstellungstechnisch aufwändig und nicht in der Lage, Verschleiß in der Verzahnung zu kompensieren.

### Offenbarung der Erfindung

### Technische Aufgabe

Der Erfindung liegt die Aufgabe zugrunde, ein Getriebe eines Lenksystems mit radialbeweglichen Loslager für eine Welle zu schaffen, das über die gesamte Lebensdauer des Getriebes einen geräuscharmen Betrieb ermöglicht.

Die Aufgabe wird mit einem Getriebe eines Lenksystems mit radialbeweglichen Loslager mit den Merkmalen des Anspruchs 1 gelöst.

### Technische Lösung

Dadurch dass zwischen dem Aussenring oder einer Buchse, die das radialbewegliche Loslager nach außen abschließt, und der Aufnahme in dem Getriebegehäuse ein Spalt vorgesehen ist, in dem ein Stützelement aus einem Werkstoff mit elastomeren Eigenschaften eingefügt ist, kann der Aussenring des radialbeweglichen Loslagers in der Aufnahme so gehalten werden, dass er nicht metallisch mit der Aufnahme in dem Getriebegehäuse in Kontakt kommt, sondern sich insbesondere quer zu seinem Freiheitsgrad ausschließlich mit Hilfe des Zug und Druck übertragenden Stützelements aus dem Werkstoff mit elastomerem Verhalten abstützt und gehalten ist. Unter elastomerem Verhalten sei hier kautschuk-elastisches Verhalten verstanden, das im unbeanspruchten Zustand eine definierte Gestalt eines Werkstücks ermöglicht und wobei das Werkstück auch nach starker Verformung wieder in die definierte Gestalt zurückkehrt.

Bevorzugte Ausführungen ergeben sich aus den Unteransprüchen.

Es ist zweckmäßig das Stützelement so in dem Spalt anzuordnen, dass es etwa quer zu dem Freiheitsgrad des radialbeweglichen Loslagers angeordnet ist und bevorzugt auf diese Weise ein Schwenklager bildet, dessen Schwenkachse etwa parallel zu der Längsachse der Welle oder des radialbeweglichen Loslagers verläuft. Das Stützelement aus einem Werkstoff mit elastomerem Verhalten ist dabei kraft- und/oder formschlüssig an dem Aussenring oder der Buchse des radialbeweglichen Loslagers und an der Aufnahme festgelegt.

Zur vereinfachten Montage des Stützelements aus einem Werkstoff mit elastomerem Verhalten kann das Stützelement einstückig mit einem, den Aussenring oder die Buchse des radialbeweglichen Loslagers umgebenden Innenring gebildet sein. Das Loslager wird somit bei der Montage in dem Getriebegehäuse mit dem Innenring und dem Stützelement gemeinsam in die Aufnahme geführt. In der Aufnahme des Gestells oder Gehäuses des Getriebes kann wiederum ein Stützring oder eine in anderer Weise geformte Auskleidung der Aufnahme angeordnet sein. Der Stützring ist bevorzugt aus einem Werkstoff mit elastomerem Verhalten gebildet und kann einstückig mit dem Stützelement und dem Innenring als eine einteilige Schwenkbuchse bildendes Bauteil geformt sein. In dem Innenring der Schwenkbuchse ist das Loslager festgelegt.

Um etwaigen Relaxationserscheinungen des Werkstoffs mit elastomerem Verhalten vorzubeugen, kann das Stützelement und/oder der Innenring und/oder der Stützring eine Strukturverstärkung, beispielsweise als Metallgitter oder als Faserverstärkung bevorzugt aus synthetischen Fasern aufweisen.

Die in axialer Richtung verlaufenden Aussenflächen des Stützelements können bevorzugt konkav geformt sein und sich etwa über die gesamte axiale Länge der Schwenkbuchse erstrecken.

Der Stützring und/oder der Innenring der Schwenkbuchse können in ihrer Gestalt an das jeweilige Loslager oder die jeweilige Aufnahme in einem Getriebegehäuse angepasst sein und können grundsätzlich variierende Wandstärken oder Bunde und dergleichen Formschluß ermöglichende Gestaltsmerkmale aufweisen. Der Stützring oder auch der Innenring der Schwenkbuchse können beispielsweise Bereiche mit größerer Wandstärke aufweisen, die bei einem Verschwenken des Innenrings mit dem Loslager als geräuschdämpfender Anschlag dienen können.

Um auf das Loslager eine radiale Anpreßkraft aufbringen zu können, weisen der Stützring und der Innenring der Schwenkbuchse zumindest jeweils einen Durchbruch auf, der es ermöglicht, dass etwa ein Druckstückende eines Druckstücks direkt auf den Aussenring oder die Buchse des Loslagers in der Lage ist, wirken zu können.

Das erfindungsgemäße radialbewegliche Loslager mit Schwenkbuchse eignet sich zur Lagerung einer Welle eines Schneckengetriebes oder Zahnstangengetriebes, wobei das Schneckengetriebe Teil eines elektrischen Aktuators einer elektrischen Hilfskraft- oder Fremdkraftlenkung sein kann.

Der Werkstoff mit elastomerem Verhalten kann ein Thermoplast im Sinne eines Spritzguss-Kunststoffs, ein Duroplast mit elastischen Eigenschaften oder ein Elastomer sein. Die gesamte Schwenkbuchse lässt sich aus solchen Kunststoffen - auch mit Faser- oder Metallgitterverstärkung - einstückig im Spritzgussverfahren oder einem anderen geeigneten Verfahren herstellen.

Als Loslager kann sowohl eine beliebige, geeignete Bauform eines Gleitlagers als auch eines Wälzlagers zur Anwendung gelangen.

### Kurze Beschreibung von Zeichnungen

Ein Ausführungsbeispiel ist nachstehend anhand der Zeichnung gezeigt. In der Zeichnung zeigt:
Fig. 1 zeigt einen schematischen Querschnitt durch ein radialbewegliches Loslager eines Getriebes eines Lenksystems.
Fig. 2 zeigt einen Querschnitt durch eine Schwenkbuchse in Fig.l.

**Bezugszeichenliste**

| | |
|---|---|
| 1 | Radialbewegliches Loslager |
| 2 | Welle |
| 3 | Getriebe |
| 4 | Aussenring |
| 5 | Aufnahme |
| 6 | Gestell |
| 7 | Spalt |
| 8 | Stützelement |
| 9 | Schwenklager |
| 10 | Längsachse |
| 11 | Schwenkachse |
| 12 | Innenring |
| 13 | Stützring |
| 14 | Schwenkbuchse |
| 15 | Aussenfläche |
| 16 | Bereich |
| 17 | Anschlag |
| 18 | Durchbruch |
| 19 | Anpressvorrichtung |
| 20 | Wälzlager |
| 21 | Druckstück |
| x | Pfeil |
| F | Kraft |

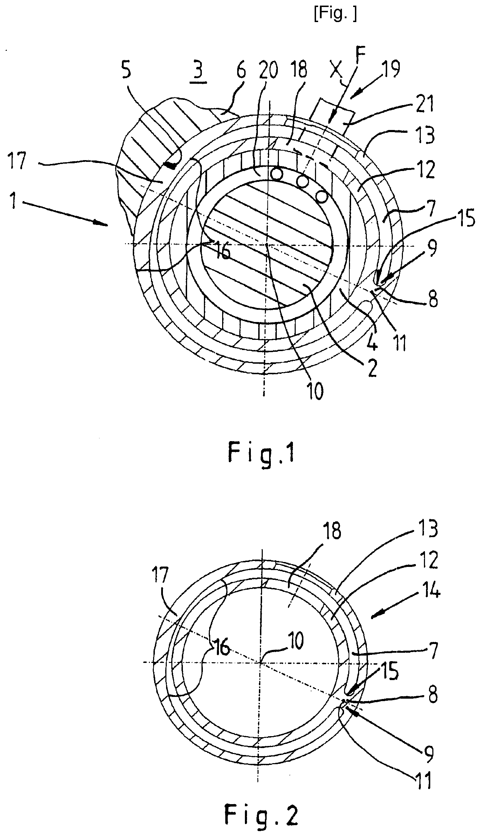

In Fig. 1 ist in einem schematischen Querschnitt durch ein Gestell 6 oder Gehäuse eines Getriebes 3 ein radialbewegliches Loslager 1 gezeigt, das zur Lagerung einer Welle 2 die eine nicht gezeigte Schnecke des als Schneckenradgetriebe ausgebildeten Getriebes 3 trägt und mit der die Welle 2 drehfest verbunden ist. Das radialbewegliche Loslager 1 ist in einer Aufnahme 5 des Getriebes 3 angeordnet und wird von einer teilweise dargestellten Anpressvorrichtung 19, genauer, von einem Druckstück 21 in radialer Richtung x mit einer Anpresskraft F beaufschlagt. Durch die Kraft F wird die Schnecke an der Welle 2 auf eine Verzahnung eines nicht gezeigten Schneckenrades gepresst.

Das radialbewegliche Loslager ist als Wälzlager 20 ausgebildet, wobei ein Aussenring 4 des Wälzlagers 20 in einem aus einem Werkstoff mit elastomerem Verhalten gebildeten Innenring 12 einer Schwenkbuchse 14 (vgl. Fig. 2) gehalten ist. Der Innenring 12 ist über ein einziges Stützelement 8 mit einem, den Innenring 12 umgebenden Stützring 13 verbunden. In dem gezeigten Ausführungsbeispiel in den Fig. 1 und 2 sind der Innenring 12, das Stützelement 8 und der Stützring 13 einstückig aus einem Spritzguss-Kunststoff gebildet. Der Innenring 12 kann sich dabei um eine Schwenkachse 11, die durch das Stützelement 8 läuft, innerhalb eines Spaltes 7 zwischen dem Stützring 13 und dem Innenring 12 bewegen. Das Stützelement 8 bildet auf diese Weise ein Schwenklager 9 für das radialbewegliche Loslager 1.

Das Stützelement 8 dient dazu, Querkräfte, quer zu dem durch den Pfeil x dargestellten Freiheitsgrad des radialbeweglichen Loslagers 1, insbesondere bei einem Drehrichtungswechsel der Welle 2 und der darauf festgelegten Schnecke, abzustützen. Das Stützelement 8 überträgt Zug und Druck so, dass sich keine Geräuschbildung ergibt. Die Schwenkachse 11 in dem Stützelement 8 verläuft parallel zu der Längsachse 10 der Welle 2. Das Stützelement 8 weist konkave Aussenflächen 15 auf, die verhindern, dass sich Risse bilden. Das Druckstück 21 durchragt in einem Durchbruch 18 den Stützring 13 und den Innenring 12 der Schwenkbuchse 14 mit radialem Spiel. Das Druckstück 21 kann sich auch am Innenring 12 abstützen, sodaß in diesem Fall nur der Stützring 13 durchragt wird. An einer dem Stützelement 8 gegenüberliegenden Seite das Stützrings 13 ist die Wandstärke in einem Umfangsbereich 16 des Stützrings 13 verstärkt. Dieser Bereich bildet einen Anschlag 17 für den Innenring 12 an dem Stützring 13.

## Patentansprüche

1. Getriebe (3) eines Lenksystems mit einem radialbeweglichen Loslager (1) für eine Welle (2),
wobei das Loslager (1) eine Buchse oder einen Außenring (4) und eine Schwenkbuchse (14)aufweist,
wobei die Schwenkbuchse (14)einen Innenring (12), einen den Innenring (12) umgebenden Stützring (13)und einen Spalt (7) zwischen dem Innenring (12) und dem Stützring (13) aufweist,
wobei die Buchse oder der Außenring (4)im Innenring (12) der Schwenkbuchse (14) gehalten ist und die Schwenkbuchse (14) in einer Aufnahme (5) eines Gestells (6) oder Gehäuses des Getriebes (3) angeordnet ist,
**dadurch gekennzeichnet, dass**
der Innenring (12) über ein einziges Stützelement (8) mit dem Stützring (13) verbunden ist und das Stützelement (8) aus einem Werkstoff mit elastomerem Verhalten gefertigt ist und dass
das Stützelement (8) als Schwenklager (9) mit einer etwa parallel zu der Längsachse (10) der Welle (2) verlaufenden Schwenkachse (11) ausgebildet ist.

2. Getriebe (3) nach Anspruch 1, **dadurch gekennzeichnet, daß** der Aussenring (4) oder die Buchse des radialbeweglichen Loslagers (1) etwa quer zu dessen Freiheitsgrad durch das Stützelement (8) gehalten ist.

3. Getriebe (3) nach einem der Ansprüche 1 bis 2, **dadurch gekennzeichnet, dass** das Stützelement (8) einstückig mit einem an dem Aussenring (4) oder der Buchse des radialbeweglichen Loslagers (1) festgelegten Innenring (12) aus einem Werkstoff mit elastomerem Verhalten gebildet ist.

4. Getriebe (3) nach einem der Ansprüche 1 bis 3, **dadurch gekennzeichnet, dass** in der Aufnahme (5) des Gestells (6) oder Gehäuses des Getriebes (3) der Stützring (13) aus einem Werkstoff mit elastomerem Verhalten festgelegt ist, wobei sich das Stützelement (8) an dem Stützring (13) abstützt.

5. Getriebe (3) nach Anspruch 3 oder 4, **dadurch gekennzeichnet, dass** der Innenring (12), das Stützelement (8) und der Stützring (13) einstückig aus dem Werkstoff mit elastomerem Verhalten gebildet sind und eine einteilige Schwenkbuchse (14) für das radialbewegliche Loslager (1) bilden.

6. Getriebe (3) nach einem der Ansprüche 1 bis 5, **dadurch gekennzeichnet, dass** das Stützelement (8) und/oder der Innenring (12) und/oder der Stützring (13) eine Strukturverstärkung aufweisen.

7. Getriebe (3) nach Anspruch 6, **dadurch gekennzeichnet, dass** die Strukturverstärkung aus einem Metallgitter oder aus synthetischen Fasern gebildet ist.

8. Getriebe (3) nach einem der Ansprüche 1 bis 7, **dadurch gekennzeichnet, dass** das Stützelement (8) konkave Aussenflächen (15) aufweist.

9. Getriebe (3) nach einem der Ansprüche 5 bis 8, **dadurch gekennzeichnet, dass** sich das Stützelement (8) etwa über die gesamte axiale Länge der Schwenkbuchse (14) erstreckt.

10. Getriebe (3) nach einem der Ansprüche 4 bis 9, **dadurch gekennzeichnet, dass** der Stützring (13) und/oder der Innenring (12) verschiedene Wandstärken aufweist.

11. Getriebe (3) nach Anspruch 10, **dadurch gekennzeichnet, dass** Bereiche (16) größerer Wandstärke an dem Stützring (13) oder Innenring (12) als Anschlag (17) für den Innenring (12) dienen.

12. Getriebe (3) nach einem der Ansprüche 3 bis 11, **dadurch gekennzeichnet, dass** der Innenring (12) und/oder der Stützring (13) einen Durchbruch (18) in radialer Richtung des radialbeweglichen Loslagers (1) aufweisen.

13. Getriebe (3) nach Anspruch 12, **dadurch gekennzeichnet, dass** der Durchbruch (18) zur Aufnahme einer Anpressvorrichtung (19) für die Welle (2) dient.

14. Getriebe (3) nach einem der Ansprüche 1 bis 13, **dadurch gekennzeichnet, dass** das Getriebe (3) ein Schneckengetriebe ist.

15. Getriebe (3) nach Anspruch 13, **dadurch gekennzeichnet, dass** die Welle (2) eine Antriebswelle eines Lenkaktuators ist und drehfest mit einer Schnecke verbunden ist.

16. Getriebe (3) nach einem der Ansprüche 1 bis 13, **dadurch gekennzeichnet, dass** das Getriebe (3) ein Zahnstangengetriebe ist, wobei die Welle (2) eine Lenkwelle mit einem Ritzel ist, welches mit einer Zahnstange kämmt.

17. Getriebe (3) nach einem der Ansprüche 1 bis 16, **dadurch gekennzeichnet, dass** der Werkstoff mit elastomerem Verhalten ein Thermoplast oder ein Duroplast oder ein Elastomer ist.

18. Getriebe (3) nach einem der Ansprüche 1 bis 17, **dadurch gekennzeichnet, dass** das radialbewegliche Loslager (1) ein Gleit- oder Wälzlager (20) aufweist.

## Claims

1. Gear (3) of a steering system having a radially movable floating bearing (1) for a shaft (2), the floating bearing (1) having a bush or an outer ring (4) and a swivelling bush (14), the swivelling bush (14) having an inner ring (12), a supporting ring (13) which surrounds the inner ring (12), and a gap (7) between the inner ring (12) and the supporting ring (13), the bush or the outer ring (4) being held in the inner ring (12) of the swivelling bush (14), and the swivelling bush (14) being arranged in a seat (5) of a frame (6) or housing of the gear (3), **characterized in that** the inner ring (12) is connected via a single supporting element (8) to the supporting ring (13), and the supporting element (8) is manufactured from a material with elastomeric behaviour, and **in that** the supporting element (8) is configured as a pivot bearing (9) with a pivot axis (11) which runs approximately parallel to the longitudinal axis (10) of the shaft (2).

2. Gear (3) according to Claim 1, **characterized in that** the outer ring (4) or the bush of the radially movable floating bearing (1) is held by way of the supporting element (8) approximately transversely with respect to its degree of freedom.

3. Gear (3) according to either of Claims 1 and 2, **characterized in that** the supporting element (8) is formed from a material with elastomeric behaviour in one piece with an inner ring (12) which is fixed on the outer ring (4) or the bush of the radially movable floating bearing (1).

4. Gear (3) according to one of Claims 1 to 3, **characterized in that** the supporting ring (13) which is made from a material with elastomeric behaviour is fixed in the seat (5) of the frame (6) or housing of the gear (3), the supporting element (8) being supported on the supporting ring (13).

5. Gear (3) according to Claim 3 or 4, **characterized in that** the inner ring (12), the supporting element (8) and the supporting ring (13) are formed in one piece from the material with elastomeric behaviour and form a single-piece swivelling bush (14) for the radially movable floating bearing (1).

6. Gear (3) according to one of Claims 1 to 5, **characterized in that** the supporting element (8) and/or the inner ring (12) and/or the supporting ring (13) have/has a structural reinforcement.

7. Gear (3) according to Claim 6, **characterized in that** the structural reinforcement is formed from a metal lattice or from synthetic fibres.

8. Gear (3) according to one of Claims 1 to 7, **characterized in that** the supporting element (8) has concave outer faces (15).

9. Gear (3) according to one of Claims 5 to 8, **characterized in that** the supporting element (8) extends approximately over the entire axial length of the swivelling bush (14).

10. Gear (3) according to one of Claims 4 to 9, **characterized in that** the supporting ring (13) and/or the inner ring (12) have/has different wall thicknesses.

11. Gear (3) according to Claim 10, **characterized in that** regions (16) of a greater wall thickness on the supporting ring (13) or inner ring (12) serve as a stop (17) for the inner ring (12).

12. Gear (3) according to one of Claims 3 to 11, **characterized in that** the inner ring (12) and/or the supporting ring (13) have/has an aperture (18) in the radial direction of the radially movable floating bearing (1) .

13. Gear (3) according to Claim 12, **characterized in that** the aperture (18) serves to receive a pressing apparatus (19) for the shaft (2).

14. Gear (3) according to one of Claims 1 to 13, **characterized in that** the gear (3) is a worm gear mechanism.

15. Gear (3) according to Claim 13, **characterized in that** the shaft (2) is a drive shaft of a steering actuator and is connected fixedly to a worm so as to rotate with it.

16. Gear (3) according to one of Claims 1 to 13, **characterized in that** the gear (3) is a rack and pinion gear mechanism, the shaft (2) being a steering shaft with a pinion which meshes with a rack.

17. Gear (3) according to one of Claims 1 to 16, **characterized in that** the material with elastomeric behaviour is a thermoplastic or a thermoset or an elastomer.

18. Gear (3) according to one of Claims 1 to 17, **characterized in that** the radially movable floating bearing (1) has a plain bearing or anti-friction bearing (20) .

## Revendications

1. Transmission (3) pour un système de direction comprenant un palier libre (1) mobile radialement pour un arbre (2),
le palier libre (1) présentant une douille ou une bague extérieure (4) et une douille pivotante (14),
la douille pivotante (14) présentant une bague intérieure (12), une bague de support (13) entourant la bague intérieure (12) et un interstice (7) entre la bague intérieure (12) et la bague de support (13),
la douille ou la bague extérieure (4) étant retenue dans la bague intérieure (12) de la douille pivotante (14) et la douille pivotante (14) étant disposée dans un logement (5) d'un bâti (6) ou d'un boîtier de la transmission (3), **caractérisée en ce que**
la bague intérieure (12) est connectée à la bague de support (13) par le biais d'un élément de support unique (8), et l'élément de support (8) est fabriqué en un matériau à comportement élastomère, et **en ce que** l'élément de support (8) est réalisé sous forme de palier pivotant (9) avec un axe de pivotement (11) s'étendant approximativement parallèlement à l'axe longitudinal (10) de l'arbre (2).

2. Transmission (3) selon la revendication 1, **caractérisée en ce que** la bague extérieure (4) ou la douille du palier libre (1) mobile radialement est retenue approximativement transversalement à son degré de liberté par l'élément de support (8).

3. Transmission (3) selon l'une quelconque des revendications 1 à 2, **caractérisée en ce que** l'élément de support (8) est formé d'une seule pièce avec une bague intérieure (12) constituée d'un matériau ayant un comportement élastomère, fixée à la bague extérieure (4) ou à la douille du palier libre (1) mobile radialement.

4. Transmission (3) selon l'une quelconque des revendications 1 à 3, **caractérisée en ce que** la bague de support (13) en un matériau ayant un comportement élastomère est fixée dans le logement (5) du bâti (6) ou du boîtier de la transmission (3), l'élément de support (8) s'appuyant contre la bague de support (13).

5. Transmission (3) selon la revendication 3 ou 4, **caractérisée en ce que** la bague intérieure (12), l'élément de support (8) et la bague de support (13) sont formés d'une seule pièce en le matériau ayant un comportement élastomère et forment une douille pivotante d'une seule pièce (14) pour le palier libre (1) mobile radialement.

6. Transmission (3) selon l'une quelconque des revendications 1 à 5, **caractérisée en ce que** l'élément de support (8) et/ou la bague intérieure (12) et/ou la bague de support (13) présentent un renforcement structurel.

7. Transmission (3) selon la revendication 6, **caractérisée en ce que** le renforcement structurel est formé d'une grille métallique ou de fibres synthétiques.

8. Transmission (3) selon l'une quelconque des revendications 1 à 7, **caractérisée en ce que** l'élément de support (8) présente des surfaces extérieures concaves (15).

9. Transmission (3) selon l'une quelconque des revendications 5 à 8, **caractérisée en ce que** l'élément de support (8) s'étend approximativement sur toute la longueur axiale de la douille pivotante (14).

10. Transmission (3) selon l'une quelconque des revendications 4 à 9, **caractérisée en ce que** la bague de support (13) et/ou la bague intérieure (12) présentent des épaisseurs de paroi différentes.

11. Transmission (3) selon la revendication 10, **caractérisée en ce que** des régions (16) de plus grande épaisseur de paroi sur la bague de support (13) ou la bague intérieure (12) servent de butée (17) pour la bague intérieure (12).

12. Transmission (3) selon l'une quelconque des revendications 3 à 11, **caractérisée en ce que** la bague intérieure (12) et/ou la bague de support (13) présentent un orifice (18) dans la direction radiale du palier libre (1) mobile radialement.

13. Transmission (3) selon la revendication 12, **caractérisée en ce que** l'orifice (18) sert à recevoir un dispositif de pressage (19) pour l'arbre (2).

14. Transmission (3) selon l'une quelconque des revendications 1 à 13, **caractérisée en ce que** la transmission (3) est une transmission à vis sans fin.

15. Transmission (3) selon la revendication 13, **caractérisée en ce que** l'arbre (2) est un arbre d'entraînement d'un actionneur de direction et est connecté de manière solidaire en rotation à une vis sans fin.

16. Transmission (3) selon l'une quelconque des revendications 1 à 13, **caractérisée en ce que** la transmission (3) est une transmission à crémaillère, l'arbre (2) étant un arbre de direction avec un pignon qui s'engrène avec une crémaillère.

17. Transmission (3) selon l'une quelconque des revendications 1 à 16, **caractérisée en ce que** le matériau ayant un comportement élastomère est une matière thermoplastique ou un plastique thermodurcissable ou un élastomère.

18. Transmission (3) selon l'une quelconque des revendications 1 à 17, **caractérisée en ce que** le palier libre (1) mobile radialement présente un palier lisse ou un palier à roulement (20).
